# EUROPEAN PATENT SPECIFICATION

(11) **EP 1 078 546 B1**
(45) Date of publication and mention of the grant of the patent: **11.02.2004**
(21) Application number: 99919413.7
(22) Date of filing: 28.04.1999
(51) Int. Cl.: H04Q 7/38

(54) **REDUCING INTERFERENCE IN CELLULAR MOBILE COMMUNICATIONS NETWORKS**
VERMINDERUNG VON INTERFERENZ IN MOBILEN ZELLULAREN KOMMUNIKATIONSNETZWERKEN
REDUCTION DU NIVEAU D'INTERFERENCE DANS DES RESEAUX DE COMMUNICATIONS MOBILES CELLULAIRES

(30) Priority: 14.05.1998 GB 9810425
(43) Date of publication of application: 28.02.2001
(60) Divisional application: 00126472.0
(73) Proprietor: FUJITSU LIMITED, Kawasaki-shi, Kanagawa 211-8588 (JP)
(72) Inventor: MOHEBBI, Behzad, San Diego, CA 92130 (US); SHEARME, Michael, John, Amersham, Buckinghamshire HP6 6QT (GB)
(74) Representative: Hitching, Peter Matthew
(86) International application number: PCT/GB1999/001344
(87) International publication number: WO 1999/059366

(56) References cited:
- EP-A- 0 645 940
- EP-A- 0 797 367
- WO-A-93/19537
- WO-A-96/08119
- WO-A-97/08911
- WO-A-97/41652
- US-A- 5 309 503

## Description

The present invention relates to cellular mobile communication networks, for example Code Division Multiple Access (CDMA) cellular networks.

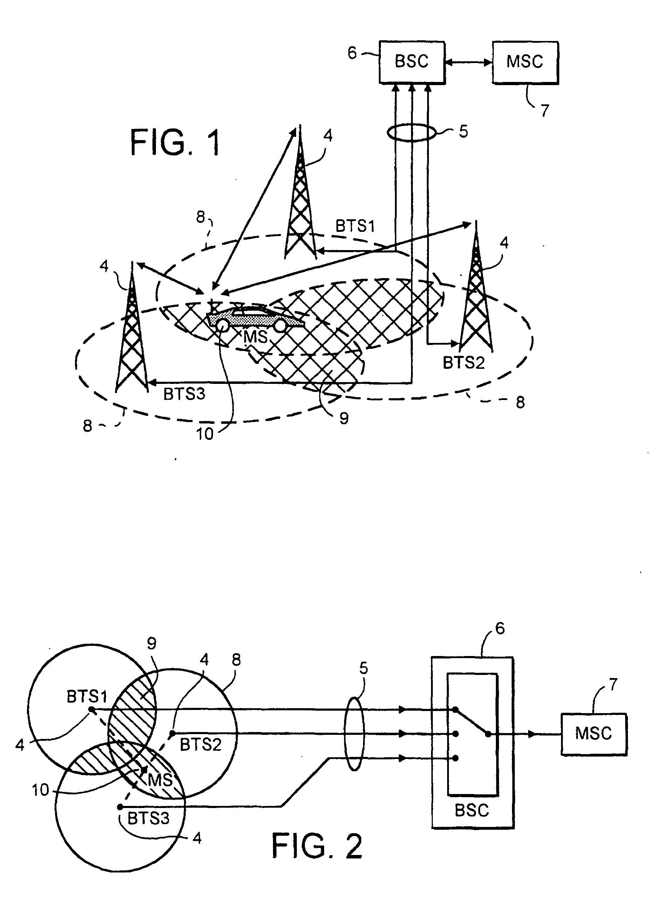

Figure 1 of the accompanying drawings shows parts of a cellular mobile telecommunication network according to the Telecommunication Industries Association (TIA)/Electronic Industries Association (EIA) Standard TIA/EIA/IS-95 of October 1994 (hereinafter "IS95"). Each of three base transceiver stations (BTSs) 4 (BTS1, BTS2 and BTS3) is connected via a fixed network 5 to a base station controller (BSC) 6, which is in turn connected to a mobile switching centre (MSC) 7. The BSC 6 serves to manage the radio resources of its connected BTSs 4, for example by performing hand-off and allocating radio channels. The MSC 7 serves to provide switching functions and coordinates location registration and call delivery.

Each BTS 4 serves a cell 8. When a mobile station (MS) 10 is in a so-called "soft hand-off" (SHO) region 9 where two or more cells overlap, a mobile station can receive transmission signals (downlink signals) of comparable strength and quality from the respective BTSs of the overlapping cells. Transmission signals (uplink signals) produced by the mobile station (MS) can also be received at comparable strengths and qualities by these different BTSs when the mobile station is in the SHO region 9.

Figure 2 of the accompanying drawings shows a situation where the MS 10 is located within the SHO region 9, and is transmitting such uplink signals that are being received by plural BTSs 4. According to the IS95 standard, a BTS 4 that receives such an uplink signal from the MS 10 relays the signal to the BSC 6 via a dedicated connection line of the fixed network 5. At the BSC 6, one of the relayed signals is selected based on a comparison of the quality of each of the received signals, and the selected signal is relayed to the MSC 7. This selection is referred to as Selection Diversity.

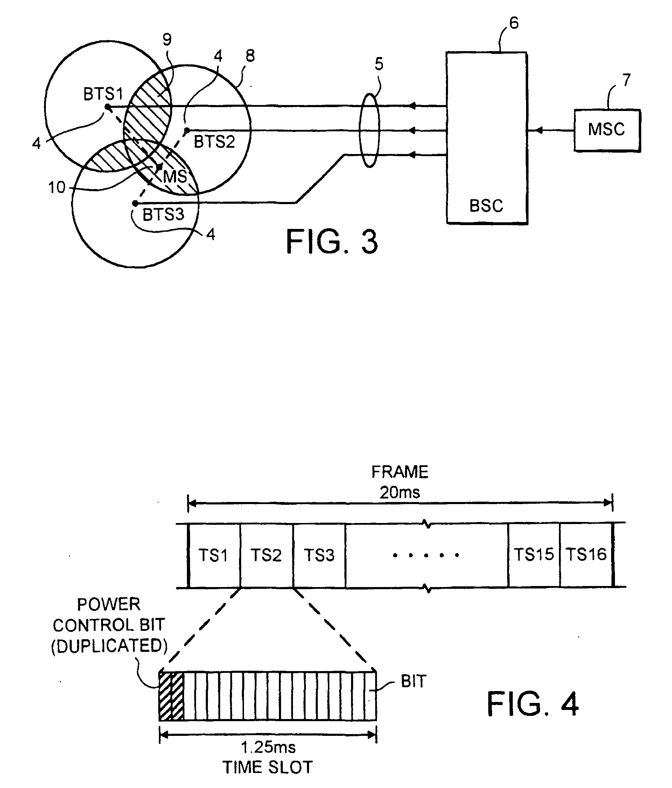

Similarly, Figure 3 of the accompanying drawings shows a situation where the MS 10 is located within the SHO region 9 and is receiving downlink signals from plural BTSs 4. According to the IS95 standard, downlink signals received by the BSC 6 from the MSC 7 are relayed to all BTSs 4 involved in the soft hand-off via respective connection lines of the fixed network 5, and subsequently transmitted by all the BTSs 4 to the MS 10. At the MS 10 the multiple signals may be combined, for example, by using maximum ratio combination (MRC), or one of them may be selected based on the signal strength or quality, i.e. using Selection Diversity as for the uplink case.

In contrast to, for example, Global System for Mobile Communication (GSM) networks, in CDMA networks each BTS 4 transmits at the same frequency. Consequently, careful control of transmission power must be maintained to minimise interference problems.

Signals are transmitted as a succession of frames according to the IS95 standard. As Figure 4 of the accompanying drawings shows, each frame is of duration 20 ms, and comprises sixteen 1.25 ms time slots. In each time slot several bits of user data and/or control information can be transmitted.

Power control of transmissions from the MS 10 to the BTSs 4 (uplink power control) in IS95 is achieved as follows. When a BTS 4 receives a signal from the MS 10 it determines whether a predetermined property of the received signal (for example absolute signal level, signal to noise ratio (SNR), signal-to-interference ratio (SIR), bit error rate (BER) or frame error rate (FER)) exceeds a preselected threshold level. Based on this determination, the BTS 4 instructs the MS 10 either to reduce or to increase its transmission power in the next time slot.

For this purpose, two bits in every time slot of a pilot channel (PCH) from the BTS 4 to the MS 10 are allocated for uplink power control (see Figure 4). Both bits have the same value, and accordingly will be referred to hereinafter as the "power control bit" (or PCB) in the singular. The power control bit is assigned a value of zero by the BTS 4 if the MS 10 is required to increase transmission power by 1 dB, and a value of one if the MS 10 is required to decrease transmission power by 1 dB. The BTS 4 is not able to request directly that the MS 10 maintain the same transmission power; only by alternately transmitting ones and zeros in the power control bit is the transmission power maintained at the same level.

When the MS 10 is in a SHO region 9, the MS 10 is required to make a decision on whether to increase or to decrease uplink transmission power based on a plurality of power control bits received respectively from the BTSs 4 involved in the soft hand-off. Consequently, an OR function is performed on all the power control bits. If the result of this OR function is zero then the MS 10 will increase power on uplink transmissions, and if the result is one then the MS 10 will decrease power on uplink transmissions. In this way, uplink transmission power is only increased if all BTSs 4 ask for an increase.

Power control of transmissions from the BTS 4 to the MS 10 (downlink power control) in IS95 is achieved as follows. When the MS 10 receives a downlink signal from a BTS 4 (or from each of a plurality of BTSs 4 in soft hand-off operation) via a traffic channel (TCH), the FER of that signal is calculated by the MS 10 which reflects the degree to which the traffic-channel signal has been corrupted by, for example, noise. This FER is then relayed by the MS 10 to the BTS 4 which transmitted the downlink signal concerned, and the BTS 4 uses this FER to decide whether to make any change to its downlink transmission power.

The soft hand-off system described above is effective in improving signal transmission between the MS 10 and the network when the MS 10 is located in regions of cell overlap near the boundaries of the individual cells. Signal quality in these regions when using a single BTS 4 may be relatively poor, but by making use of more than one BTS 4 the quality may be substantially improved.

However, the IS95 soft hand-off system has the disadvantage of increasing signal traffic in the cellular network since it is necessary to transmit downlink signals carrying the same data and/or control information to the MS 10 from every BTS 4 involved in the soft hand-off. This duplication of transmissions is undesirable because each transmission is potentially a source of interference to other transmissions in the network.

For example, the downlink power control method aims at ensuring that the MS 10 receives a useful downlink signal from every one of the BTSs 4 involved in the soft hand-off. In the event that the downlink signal from one of the BTSs is undergoing a deep fade, the MS 10 will instruct the BTS concerned to increase its downlink transmission power significantly. However, in this case the BTS concerned will inevitably cause greater interference to other transmissions taking place in its cell and in neighbouring cells. This problem may be exacerbated if, as in the IS95 standard, only one PCB is allocated in common for downlink power control to all of the BTSs involved in the soft hand-off. In this case, not only does the BTS which is experiencing a deep fade increase its downlink transmission power significantly, but also every other one of the BTSs involved in the soft hand-off increases its downlink transmission power, significantly increasing the interference within the cellular network as a whole.

Therefore it is desirable to reduce interference in the cellular network associated with the soft hand-off operation. It is also desirable to reduce interference in cellular networks in other situations in which a mobile station is in communications range of more than one base transceiver station.

WO-A-97/08911 discloses a cellular mobile communications network comprising a mobile station having: base transceiver station decision means operable, when the mobile station is capable of receiving a downlink signal from a plurality of base transceiver stations of the network, to determine that at least one of the base transceiver stations of the said plurality is not to transmit a subsequent such downlink signal to the mobile station; and base transceiver station informing means operable to inform the plurality of base transceiver stations of the determination made by the said base transceiver station decision means using one or more uplink signals transmitted by the mobile station to such base transceiver stations; wherein each said base transceiver station includes receiver means for receiving said uplink signals and disabling means operable to prevent its base transceiver station from transmitting said subsequent downlink signal in response to the received uplink signal.

In another network described in EP-A-0797367 the mobile station judges which radio channels between the plurality of base transceiver stations and the mobile station are invalid (have a poor radio state) or redundant (because there is another channel with a quite good radio state). In response to receipt of an uplink signal containing the judgement result a base transceiver station sends a control signal to the base station controller; which in turn stops a downlink wire link transmission path from the base station controller to the base station having the invalid or redundant radio channel.

A cellular mobile communications network embodying a first aspect of the present invention is characterised in that the informing means is operable to generate base transceiver station selection information according to the determination made by the decision means using an identification system in which each of the plurality of base transceiver stations has a distinct identity, and to transmit the same said selection information to the plurality of base transceiver stations without including distinct identity information for each of the plurality of base transceiver stations in the selection information; and each of the plurality of base transceiver stations is informed, separately from said selection information, of its said identity in the identification system used by the informing means, and is operable to process the selection information according to its said identity to determine whether or not it is required to transmit said subsequent downlink signal.

In one embodiment the mobile station further includes: candidate base transceiver station identifying means operable to identify at least two different candidate base transceiver station selections, each such selection specifying one or more base transceiver stations of the said plurality for possible use in transmitting the subsequent downlink signal to the mobile station; and network interference determining means operable, for each of the candidate selections, to produce a measure of the network interference that would be caused by the base transceiver station(s) specified in that candidate selection transmitting the said subsequent downlink signal to the mobile station; said base transceiver station decision means being operable, in dependence upon the network-interference measures, to decide which one of the said candidate selections is to be used to transmit the said subsequent downlink signal to the mobile station, so as to tend to reduce network interference arising from the transmission of that downlink signal.

According to a second aspect of the present invention there is provided a communications method for use in a cellular mobile communications network, comprising the steps of: when a mobile station of the network is capable of receiving a downlink signal from a plurality of base transceiver stations of the network, the mobile station determines that at least one of the plurality of base transceiver stations is not to transmit a subsequent such downlink signal to the mobile station; the plurality of base transceiver stations are informed of the determination made by the mobile station using one or more uplink signals transmitted by the mobile station to such base transceiver stations; and each said base transceiver station receives the uplink signals and prevents itself from transmitting said subsequent downlink signal in response to the received uplink signal; characterised in that: the mobile station generates base transceiver station selection information according to the determination made by the decision means using an identification system in which each of the plurality of base transceiver stations has a distinct identity, and transmits the same said selection information to the plurality of base transceiver stations without including distinct identity information for each of the plurality of base transceiver stations in the selection information; and each of the plurality of base transceiver stations is informed, separately from said selection information, of its said identity in the identification system used by the informing means, and processes the selection information according to its said identity to determine whether or not it is required to transmit said subsequent downlink signal.

In one embodiment the communications method further includes: identifying at least two different candidate base transceiver station selections, each such selection specifying one or more base transceiver stations of the said plurality for possible use in transmitting the subsequent downlink signal to the mobile station; producing, for each of the said candidate selections, a measure of the network interference that would be caused by the base transceiver station(s) specified in that selection transmitting the said subsequent downlink signal to the mobile station; and deciding, in dependence upon the network-interference measures, which one of the said candidate selections to use to transmit that subsequent downlink signal to the mobile station, so as to tend to reduce network interference arising from the transmission of that downlink signal.

According to a third aspect of the present invention there is provided a base transceiver station for use in a cellular mobile communications network, comprising: receiving means operable, when a mobile station of the network is capable of receiving a downlink signal from the claimed base transceiver station and at least one further base transceiver station of the network, to receive one or more uplink signals transmitted by the mobile station to inform the base transceiver stations that the mobile station has determined that at least one of the base transceiver stations is not to transmit a subsequent such downlink signal to the mobile station; and disabling means operable to prevent the claimed base transceiver station from transmitting said subsequent downlink signal in response to the received uplink signal(s); characterised in that: the receiving means has a selection information portion responsive to base transceiver station selection information generated by said mobile station using an identification system in which the claimed base transceiver station and each further base transceiver station has a distinct identity, the same said selection information being transmitted to the claimed base transceiver station and each further base transceiver station by the mobile station without including distinct identify information for each of the plurality of base transceiver stations in the selection information; the receiving means also has an identity information portion responsive to information supplied to the claimed base transceiver station separately from the selection information and informing the claimed base transceiver station of its said identity in the identification system used by the mobile station; and the disabling means is operable to process the selection information received by said selection information portion according to said identity received separately by said identity information portion to determine whether or not the claimed base transceiver station is required to transmit said subsequent downlink signal.

In one embodiment of the invention, the candidate selections may include, for each BTS of the plurality, a selection in which just that BTS is specified, as well as a further selection in which all the BTSs of the plurality are specified. It is not essential for the candidate selections to include selections specifying only one BTS. For example, if there are three BTSs involved in a soft hand-off operation, the selections could be BTS1 + BTS2, BTS2 + BTS3, BTS3 + BTS1, and BTS1 + BTS2 + BTS3. It is also not essential for the candidate selections to include a selection specifying all the BTSs involved in the soft hand-off. Furthermore, the transmission powers for the BTSs specified in a particular selection can be set to any suitable combination of values capable of facilitating adequate reception of the downlink signal at the subject mobile station. Thus, for example, two or more candidate selections could specify the same BTSs but specify different respective sets of transmission powers for the selections. In other words, two candidate selections could differ from one another only in respect of the transmission powers of the (same) specified BTSs.

The present invention is not limited to downlink transmission selection for the purpose of interference reduction. Embodiments of the invention can be used in any situation in which it is desired to prevent at least one BTS in communications range of a mobile station from transmitting a downlink signal to that mobile station.

Reference will now be made, by way of example, to the accompanying drawings, in which:
Figure 1, discussed hereinbefore, shows parts of a cellular mobile telecommunication network according to IS95;
Figure 2, also discussed hereinbefore, shows a schematic view for use in explaining processing of uplink signals in a soft hand-off operation performed by the Figure 1 network;
Figure 3, also discussed hereinbefore, shows a schematic view for use in explaining processing of downlink signals in such a soft hand-off operation;
Figure 4, also discussed hereinbefore, illustrates the format of a time frame in the Figure 1 network;
Figure 5 shows parts of a mobile telecommunication network embodying the present invention;
Figure 6 shows parts of a mobile station embodying to the present invention;
Figure 7 is a detailed block diagram showing parts of the Figure 6 mobile station;
Figure 8 is a flowchart for use in explaining operation of the Figure 6 mobile station;
Figure 9 is a schematic view for illustrating a possible format of a message transmitted by the Figure 6 mobile station; and
Figure 10 shows parts of a base transceiver station embodying the present invention.

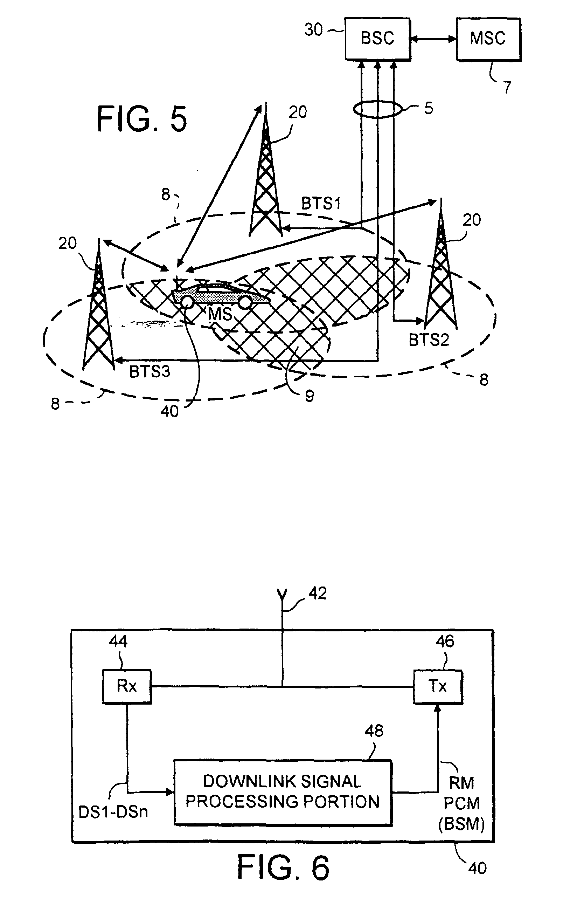

Figure 5 shows parts of a mobile telecommunication network embodying the present invention. In Figure 5, elements that are the same as elements of the Figure 1 network described previously have the same reference numerals and an explanation thereof is omitted.

The Figure 5 network is a wideband CDMA (W-CDMA) network for a proposed new standard for mobile telecommunications, referred to as a universal mobile telecommunications system (UMTS) or UMTS terrestrial radio access (UTRA). This is generally similar to the IS95-standard network described previously, although certain implementation details are yet to be finalised. Details that are different from IS95 include the frame duration, which is 10ms, and the time-slot duration which is 625µs. The overall bit rate is within the range from 8kbits/s to 2Mbits/s. Also downlink power control in W-CDMA is closed-loop and is based on the same principles as the uplink power control.

In Figure 5, each of three base transceiver stations (BTSs) 20 (BTS1, BTS2 and BTS3) is connected via a fixed network 5 to a base station controller (BSC) 30, which is in turn connected to a mobile switching centre (MSC) 7. Each BTS 20 serves a cell 8. A mobile station (MS) 40 is in a soft hand-off (SHO) region 9 and can receive downlink signals from, and transmit uplink signals to, all the BTSs 20 involved in the soft hand-off.

The Figure 5 network corresponds generally with the Figure 1 network, but the MS 40, BTSs 20 and BSC 30 are constructed and operate differently from the corresponding elements in Figure 1.

Figure 6 is a block diagram showing parts of a MS 40 embodying the present invention. An antenna element 42 is connected (e.g. via a duplexer - not shown) to a receiver portion 44 and a transmitter portion 46. A downlink signal processing portion 48 receives from the receiver portion 44 respective downlink signals DS1 to DSn produced by n BTSs BTS1 to BTSn involved in the soft hand-off operation. The downlink signal processing portion 48 applies a BTS selection message BSM to the transmitter portion 46.

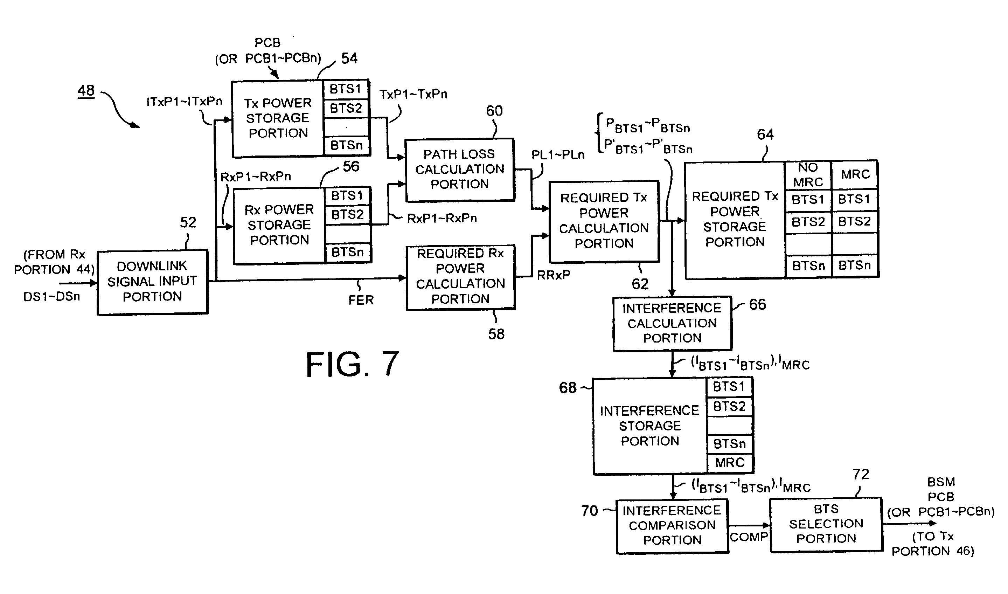

Figure 7 shows a block diagram of the downlink signal processing portion 48. The downlink signal processing portion 48 includes a downlink signal input portion 52 which receives the downlink signals DS1 to DSn from the receiver portion 44. The downlink signal processing portion 48 further includes respective TX and RX power storage portions 54 and 56, each connected to the downlink signal input portion 52. The TX power storage portion 54 receives a single power control bit PCB, or respective power control bits PCB1 to PCBn corresponding respectively to the BTSs involved in the soft hand-off operation, and also receives from the downlink signal input portion 52 initial transmission powers TXP1 to TXPn corresponding respectively to those BTSs.

The downlink signal input portion 52 also applies to the RX power storage portion 56.received power measures RXP1 to RXPn corresponding respectively to the BTSs, each representing the power at which a downlink signal from the corresponding BTS is received by the mobile station.

Each of the power storage portions 54 and 56 includes storage regions corresponding respectively to the different BTSs.

The downlink signal processing portion 48 also includes a required RX power calculation portion 58 which receives a further signal measure FER, representing a downlink frame error rate determined by the mobile station, from the downlink signal input portion 52.

The downlink signal processing portion 48 further includes a path loss calculation portion 60 which receives from the TX power storage portion 54 respective transmit powers TXP1 to TXPn for the different BTSs and also receives respective receive powers RXP1 to RXPn for the different BTSs from the RX power storage portion 56.

The downlink signal processing portion 48 further includes a required TX power calculation portion 62 which receives respective path loss measures PL1 to PLn for the different BTSs from the path loss calculation portion 60 and a required RX power RRXP from the required RX power calculation portion 58.

The downlink signal processing portion 48 further includes a required TX power storage portion 64 and an interference calculation portion 66, both of which receive from the required TX power calculation portion 62 first and second sets of required transmission powers. The first set of required transmission powers P_{BTS1} to P_{BTSn} represent required transmission powers of the different BTSs when the mobile station 40 is not using maximum ratio combining (MRC). The second set of transmission power measures P'_{BTS1} to P'_{BTSn} represent the required transmission powers of the different BTSs when MRC is employed at the MS40. The required TX power storage portion 64 has first and second sets of storage regions corresponding to the two sets of transmission power measures.

The downlink signal processing portion 48 further includes an interference storage portion 68 which receives interference measures I_{BTS1} to I_{BTSn} corresponding respectively to the different BTSs (transmitting alone), as well as a further interference measure I_{MRC} representing interference when all BTSs are used to transmit downlink signals and MRC is performed at the MS 40. The interference storage portion 68 has storage regions corresponding respectively to these different interference measures.

The downlink signal processing portion 48 further includes an interference comparison portion 70 which receives the interference measures I_{BTS1} to I_{BTSn} and I_{MRC} from the interference storage portion 68 and produces a comparison signal COMP which is applied to a BTS selection portion 72. The BTS selection portion 72 produces a BTS selection message (BSM) and a power control bit PCB (or plural PCBs PCB1 to PCBn) which are applied to the transmitter portion 46 of the mobile station 40.

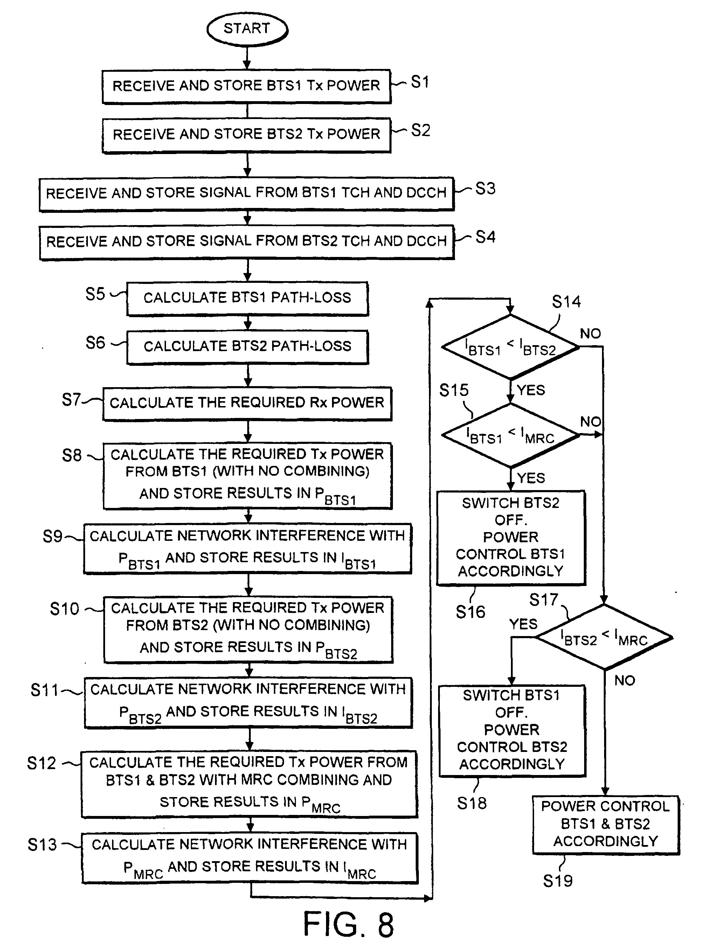

Operation of the mobile station 40 of Figure 7 will now explained with reference to the flowchart of Figure 8. In this example, it will be assumed, for the sake of simplicity, that there are only two BTSs involved in the soft hand-off operation.

In a first step S1 the downlink signal input portion 52 detects, in a downlink signal received from a first one (hereinafter BTS1) of the BTSs involved in the soft hand-off operation, for example a signal on a dedicated control channel DCCH thereof, the initial transmit power ITXP1 of BTS1.

As explained previously, the downlink power control method proposed for use in W-CDMA adjusts the transmission power of the BTSs in communication with a particular MS in dependence upon power control bits PCBs generated by the mobile station. At present, the proposed standard for W-CDMA specifies that a single PCB be used to control the downlink transmit powers of all of the BTSs involved in the soft hand-off operation. Thus, in this case all the involved BTSs increase or reduce their transmission powers together in accordance with the single PCB. However, it is also possible, in an embodiment of the present invention, to allocate each BTS involved in the soft hand-off operation its own individual PCB, enabling the MS to control the downlink transmission powers of the different involved BTSs independently of one another. In this case (as shown in parenthesis in Figure 7) the TX power storage portion 54 receives PCBs PCB1 to PCBn corresponding respectively to the different BTSs involved in the soft hand-off operation.

In step S1 the initial transmission power ITXP1 for BTS1 is stored in the storage region allocated to BTS1 in the TX power storage portion 54. Thereafter, each time a new PCB (PCB or PCB1, as the case may be) applicable to BTS1 is generated by the MS (for example every time slot) the TX power storage portion 54 updates the transmission power TXP1 stored in the storage region for BTS1 so that, at any given time, the value stored represents the instantaneous downlink transmission power of BTS1.

In step S2 the initial transmission power ITXP2 for the second BTS (hereinafter BTS2) involved in the soft hand-off operation is detected by the downlink signal input portion 52 in one of the downlink signals received from BTS2 and is stored in the storage region of the TX power storage portion 54 allocated to BTS2. The stored transmission power TXP2 for BTS2 is also updated each time a PCB (PCB or PCB2) applicable to BTS2 is generated by the mobile station.

Next, in step S3, the downlink signal input portion 52 processes the downlink signal DS1 received from BTS1 (either on a traffic channel TCH thereof or on a control channel dedicated control channel DCCH) thereof) and derives therefrom a measure RXP1 of the received power of the downlink signal DS1 concerned. This measure (for example the received signal strength RSS) is stored in the storage region allocated to BTS1 in the RX power storage portion 56.

In step S4 the same operation is performed for BTS2 and the result stored in the storage region allocated to BTS2 in the RX power storage portion 56. Incidentally, in steps S3 and S4, the received power RXP may be calculated from the DCCH downlink signal in the event (as explained later) that the traffic channel TCH from the BTS concerned is switched off.

In step S5 the path loss calculation portion 60 receives from the storage location for BTS1 in the TX power storage portion 54 the stored (and updated) transmission power TXP1 for BTS1, and also receives from the storage region for BTS1 in the RX power storage portion 56 the received power RXP1 for BTS1. The path loss calculation portion 60 subtracts the received power RXP1 from the transmit power TXP1 to determine the path loss PL1 for BTS1. In step S6 the same operations are repeated for BTS2.

In step S7 the required RX power calculation portion 58 determines, based on a predetermined characteristic (e.g. the frame error rate FER) of the received downlink signals as a whole (e.g. after maximum ratio combining MRC), a required RX power RRXP which represents the minimum power that the mobile station presently needs to receive in order to produce an overall downlink signal DS of acceptable quality.

In step S8 the required TX power calculation portion 62 receives the path loss PL1 for BTS1 and the required RX power RRXP. Based on these inputs, it calculates a downlink transmission power P_{BTS1} required from BTS1 assuming that BTS1 is the only BTS permitted to send the downlink signal in the next time slot to the mobile station. This required transmission power P_{BTS1} may be calculated, for example, by adding together PL1 and RRXP. The calculated required downlink transmission power P_{BTS1} is then stored in the TX power storage portion 64 in the storage region allocated to BTS1 in the first set of storage regions thereof (the set relating to the case in which maximum ratio combining (MRC) is not performed in the mobile station).

Then, in step S9, the interference calculation portion 66 receives the required downlink transmission power P_{BTS1} calculated in step S8 and calculates therefrom a measure I_{BTS1} of the amount of network interference that would be caused by BTS1 (alone) operating at the downlink transmission power P_{BTS1}. This measure is stored in an appropriate one of the storage region allocated to BTS1 in the interference storage portion 68.

Next, in steps S10 and steps S11 the processings of steps S8 and S9 are repeated for BTS2. The resulting required downlink transmission power P_{BTS2} and the network-interference measure I_{BTS2} are stored respectively in storage regions allocated to BTS2 in the portions 64 and 68.

In step S12 the required TX power calculation portion 62 calculates, for each of the BTSs BTS1 and BTS2, the required downlink transmission power P'_{BTS1} or P' _{BTS2} assuming that MRC is to be used at the mobile station. These results are stored in storage regions allocated to BTS1 and BTS2 in the second set of storage regions of the required TX power storage portion 64.

In step S13 the interference calculation portion 66 employs the required downlink transmission powers P' _{BTS1} and P'_{BTS2} calculated in step S12 to determine a measure of the network interference that would result assuming that BTS1 is transmitting at P'_{BTS1} and BTS2 is transmitting at P'_{BTS2}. The resulting interference measure I_{MRC} is stored in a further one of the storage regions of the interference storage portion 68.

Next, in step S14 the interference comparison portion 70 compares the interference measures I_{BTS1} and I_{BTS2} retrieved from the interference storage portion 68. If I_{BTS1} is less than I_{BTS2}, processing proceeds to step S15 in which I_{BTS1} is compared with I_{MRC·} If I_{BTS1}< I_{MRC} in step S15, in step S16 the BTS selection portion 72 determines that the downlink signal in the next time slot should be sent to the mobile station by BTS1 alone, on the basis that this will result in the lowest network interference. The BTS selection portion 72 generates a BTS selection message (BSM) specifying that BTS2 is not to transmit the downlink signal in the next time slot. The BSM is delivered to the transmitter portion 46 of the mobile station for transmission to BTS2. At the same time, the BTS selection portion 72 determines the power control bit PCB to be transmitted to BTS1 to control the downlink transmission power of BTS1 in the next time slot so that it has the value P_{BTS1} calculated in step S8. As noted previously, this PCB may be a single PCB common to all BTSs involved in the soft hand-off operation, or a unique PCB (PCB1) for BTS1.

If, in step S14, I_{BTS2} was found to be less than or equal to I_{BTS1}, or if in step S15 I_{MRC} was found to be less than or equal to I_{BTS1}, processing proceeds to step S17. In step S17, the interference comparison portion 70 compares I_{BTS2} with I_{MRC}. If I_{BTS2} is less than I_{MRC} processing proceeds to step S18 in which the BTS selection portion 72 determines that the downlink signal for the mobile station in the next time slot should be transmitted by BTS2 alone, on the basis that BTS2 operating alone will produce the lowest network interference. In this case, the BTS selection portion 72 generates a BSM which instructs BTS1 not to transmit in the next time slot. Also, the PCB applicable to BTS2 is set by the BTS selection portion 72 to control the downlink transmission power of BTS2 to meet the required TX power P_{BTS2} calculated in step S10.

If in step S17 the result of the comparison is that I_{MRC} is less than or equal to I_{BTS2}, processing proceeds to step S19 in which the BTS selection portion 72 determines that both BTS1 and BTS2 should be used to transmit the downlink signal in the next time slot, on the basis that this will result in the lowest network interference. In this case, the BTS selection portion 72 generates a BSM specifying that both BTSs are to transmit in the next time slot, and sets the PCB (or PCBs) to cause the BTSs to transmit the downlink signal in the next time slot at the required transmission powers P' _{BTS1} and P' _{BTS2} calculated in step S12.

Thus, in the example described above it can be seen that three different candidate BTS selections are identified: a first candidate selection in which BTS1 alone is specified for transmitting the downlink signal; a second candidate selection in which BTS2 alone is specified for transmitting the downlink signal; and a third candidate selection in which both BTS1 and BTS2 are specified for transmitting the downlink signal. For each candidate selection, the required transmission power P_{BTS} (or P' _{BTS}) of each BTS specified in the selection is calculated and a measure of the network interference that would result from the specified BTS(s) transmitting is also calculated. These network-interference measures are then employed (e.g. the lowest measure is found by comparison of the measures) to decide which of the candidate selections to use for transmission of the downlink signal, so as to tend to reduce the network interference associated with that transmission.

It is not essential for the candidate selections to include selections specifying only one BTS. For example, if there are three BTSs involved in a soft hand-off operation, the selections could be BTS1 + BTS2, BTS2 + BTS3, BTS3 + BTS1, and BTS1 + BTS2 + BTS3. It is also not essential for the candidate selections to include a selection specifying all the BTSs involved in the soft hand-off. Furthermore, the transmission powers for the BTSs specified in a particular selection can be set to any suitable combination of values capable of facilitating adequate reception of the downlink signal at the subject mobile station. Thus, for example, two or more candidate selections could specify the same BTSs but specify different respective sets of transmission powers for the selections.

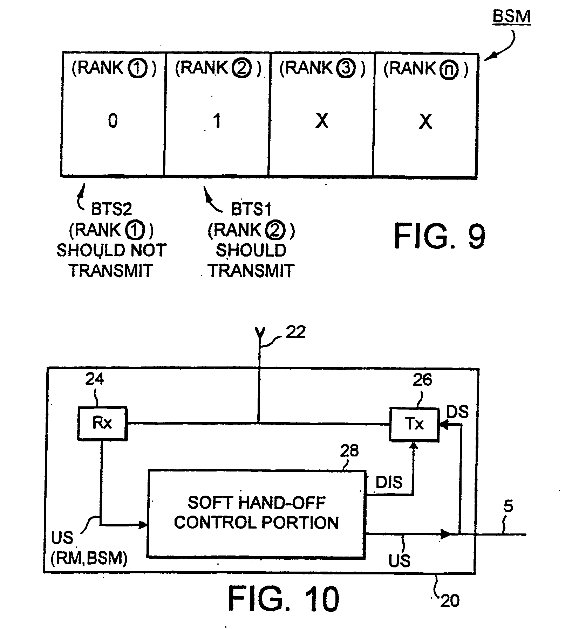

One example of the possible format of the BTS selection message BSM will now be explained with reference to Figure 9.

The BTSs involved in a soft hand-off operation are ranked in some way. For example, the ranking may be carried out in the mobile station based on a predetermined property of the respective downlink signals DS1 to DSn that are received by the MS 40, for example the received signal strength (RSS). Alternatively, the ranking may be on a "first-come first-served" basis, i.e. on the order in which the BTSs became involved in the soft hand-off operation. Alternatively, the ranking could be random. Once the ranking has been determined, the mobile station sends a ranking message RM, indicating the order in which the BTSs are presently ranked, via a control channel to all BTSs.

As shown in Figure 9, the BSM has one bit corresponding to each rank of BTS, and these bits are arranged in the BSM in the ranking order determined by the MS. Take, for example, the case described previously with reference to Figure 8 in which there are only two BTSs involved in the soft hand-off operation, namely BTS1 and BTS2. Assume also that, in the order of ranking determined by the mobile station, BTS2 is the highest-ranked BTS (rank ①), and that the other BTS, BTS1, has rank ②**,.** Assume also that the outcome of the comparisons of the interference measures is the outcome shown in S16, namely that BTS2 should not transmit the downlink signal in the next time slot. To communicate this result to the BTSs involved in the soft hand-off operation, the first bit (corresponding to rank ①) in the BSM is set to 0, to indicate that BTS2 should not transmit the downlink signal in the next time slot. The second bit of the BSM (which corresponds to the rank-② BTS) is set to 1, to indicate that the rank-② BTS, BTS1, should transmit the downlink signal in the next time slot. Any remaining bits of the BSM can be set to a "don't-care" state, since in this example only two BTSs are involved in the soft hand-off operation. Incidentally, the BSM in this case could consist of two bits only, of course.

The ranking of a BTS may periodically require updating, for several reasons. Firstly, as the MS 40 moves, a downlink signal may be received from a new BTS or an existing BTS may no longer may able to provide a detectable downlink signal. Secondly, the qualities of the signals received from the BTSs 20 may have changed, e.g. due to fading. Thus, from time to time a ranking update is required. Such an update may be carried out periodically at regular time intervals (for example every several hundred milliseconds as in GSM networks), or every frame or even every time slot. Alternatively, the ranking could be updated only when a new BTS is detected or contact with an existing one lost.

Figure 10 is a block diagram showing parts of a BTS 20 embodying the present invention. This BTS 20 is specially adapted to receive and process the ranking message RM and the BTS selection message BSM sent by the MS 40 of Figure 6.

An antenna element 22 is connected (e.g. via a duplexer - not shown) to a receiver portion 24 and a transmitter portion 26. A soft hand-off control portion 28 receives an uplink signal US from the receiver portion 24, and in turn applies the received US (or a signal derived therefrom) to the fixed network 5 for transmission to the BSC 30. The transmitter portion 26 receives a downlink signal DS via the connection line 5 from the BSC 30 (Figure 5) and a disabling signal DIS from the soft hand-off control portion 28.

In use of the BTS 20, the uplink signals sent by the MS 40 when it is in the soft hand-off region 9 include, from time to time, a ranking message RM. The uplink signals US detected by the receiver portion 24 in the BTS 20 are applied to the soft hand-off control portion 28. When the soft hand-off control portion 28 detects that a ranking message RM is included in one of the uplink signals US received thereby, it processes the ranking message concerned to determine the rank of its BTS within the ranking order determined by the MS.In each time slot, the uplink signals US produced by the receiver portion 24 also include a BTS selection message BSM determined by the MS 40 as described above. Operation of the soft hand-off control portion 28 in response to the presence of such a BSM in the uplink signal US produced by the receiver portion 24 will now be described.

It is assumed that, by the time the BSM is received, a ranking message RM has already been received and processed (as indicated above) by the soft hand-off control portion 28.

The BSM is supplied by the receiver portion 24 to the soft hand-off control portion 28 where is examined. The soft hand-off control portion 28 checks the rank of its BTS based on the last-received ranking message and then examines the bit corresponding to that rank in the BSM. If the bit is 0 the soft hand-off control portion 28 applies a disabling signal DIS to the transmitter portion 26 to prevent it from transmitting the downlink signal in the next time slot.

The measure of network interference I_{BTS1}, I_{BTS2} or I_{MRC} can be calculated as follows by considering the interference that would be experienced by an imaginary mobile station, other than the subject mobile station, operating in the soft hand-off region (Figure 5), as a consequence of the BTS(s) concerned transmitting at the determined required transmission power(s). In the case of I_{BTS1}, for example, the interference is calculated based on the required transmission power P_{BTS1} from BTS₁ to the subject mobile station and the associated mean path loss experienced by the imaginary mobile station (which is the same as for the subject mobile station). This mean path loss is a time-averaged path loss for which the averaging period is chosen so as to average out (or ideally eliminate) the effects of Rayleigh fading. In other words, the path loss variation due to Rayleigh fading is averaged out.

In the case of I_{MRC} the interference is calculated based on the cumulative sum of the respective carrier power levels of BTS1 and BTS2 at the antenna of the imaginary mobile station. Again, these carrier power levels are calculated based on the required transmission powers P'_{BTS1} and P'_{BTS2} for BTS1 and BTS2 when MRC is used and the respective mean path losses which have already been established at the subject mobile station (and are assumed to be the same for the imaginary mobile station).

Take, for example, a situation in which the downlink signal from BTS2 is undergoing a deep fade. This means that PL2 will be large relative to PL1. In this case, the required transmission power P_{BTS2} for BTS2 will be large as compared to the required transmission power BTS1 for BTS1. Thus, I_{BTS2} will be large relative to I_{BTS1}. Also, in view of the large PL2, P' _{BTS2} will also be large so that I_{MRC} will be larger than I_{BTS1}. Accordingly, the decision is made that BTS2 should not transmit the downlink signal in the next time slot, so as to reduce the network interference resulting from transmission of that downlink signal.

In the embodiment described above, the TX power storage portion 54 receives the initial downlink transmission powers of the involved BTSs and then updates these as necessary on receipt of the power control bits PCBs for the different BTSs. However, it would also be possible for the instantaneous downlink transmission powers TXP themselves to be supplied directly to the TX power storage portion 54 in each time slot in place of the PCBs.

It will also be understood that the way in which the transmission powers TXP (or IXTP + ∑PCB) and receive powers RXP are made available to the MS is not critical to the invention. For example, it is not necessary for the MS to rank the BTSs. All that is necessary is that each BTS is able to identify to which BTS a particular received value (e.g. ITXP or RXP) relates. Such identification could be carried out in many different ways other than ranking.

It will also be understood that it is not necessary for the processing shown in Figure 8 to take place every time slot. It would be possible for the signals such as RXP and PCM to be transmitted only once per frame, in which case the decision-making would be made on a frame-by-frame basis.

Furthermore, it would be possible for the decisions to be made at time intervals other than frames or time slots, for example based on a time interval consistent with the fading characteristics of the RF channels in the network.

Although the present invention has been described above in relation to the proposed European wideband CDMA system (UTRA) it will be appreciated that it can also be applied to a system otherwise in accordance with the IS95 standard. It would also be possible to apply the invention in other cellular networks not using CDMA, for example networks using one or more of the following: multiple-access techniques: time-division multiple access (TDMA), wavelength-division multiple access (WDMA), frequency-division multiple access (FDMA) and space-division multiple access (SDMA).

## Claims

1. A cellular mobile communications network comprising a mobile station (40) having:
base transceiver station decision means (48) operable, when the mobile station is capable of receiving a downlink signal (DS1-DSn) from a plurality of base transceiver stations of the network (BTS1-BTSn), to determine that at least one of the base transceiver stations of the said plurality is not to transmit a subsequent such downlink signal to the mobile station; and
base transceiver station informing means (46) operable to inform the plurality of base transceiver stations of the determination made by the said base transceiver station decision means using one or more uplink signals (US) transmitted by the mobile station to such base transceiver stations;
wherein each said base transceiver station (20) includes receiver means (24) for receiving said uplink signals and disabling means (28) operable to prevent its base transceiver station from transmitting said subsequent downlink signal in response to the received uplink signal(s);
**characterised in that**:
the informing means is operable to generate base transceiver station selection information (BSM) according to the determination made by the decision means using an identification system in which each of the plurality of base transceiver stations has a distinct identity (RANK (1), (2), ...), and to transmit the same said selection information to the plurality of base transceiver stations without including distinct identity information for each of the plurality of base transceiver stations in the selection information; and
each of the plurality of base transceiver stations is informed, separately from said selection information, of its said identity in the identification system used by the informing means, and is operable to process the selection information according to its said identity to determine whether or not it is required to transmit said subsequent downlink signal.

2. A network as claimed in claim 1, wherein the mobile station further includes:
candidate base transceiver station identifying means operable to identify at least two different candidate base transceiver station selections (BTS1, BTS2, BTS1 + BTS2), each such selection specifying one or more base transceiver stations of the said plurality for possible use in transmitting the subsequent downlink signal to the mobile station;
network interference determining means (52-68) operable, for each of the candidate selections, to produce a measure of the network interference (I_{BTS1}, I_{BTS2}, I_{MRC}) that would be caused by the base transceiver station or stations specified in that candidate selection transmitting the said subsequent downlink signal to the mobile station;
said base transceiver station decision means (70, 72) being operable, in dependence upon the network-interference measures, to decide which one of the said candidate selections is to be used to transmit the said subsequent downlink signal to the mobile station, so as to tend to reduce network interference arising from the transmission of that downlink signal.

3. A network as claimed in claim 2, wherein at least one of the said candidate selections (BTS1, BTS2) does not specify one or more of the base transceiver stations of the said plurality.

4. A network as claimed in claim 2 or 3, wherein at least one of the said candidate selections (BTS1 + BTS2). specifies two or more base transceiver stations of the said plurality, and the said mobile station (40) includes combiner means operable to combine the respective downlink signals received from those two or more base transceiver stations.

5. A network as claimed in any one of claims 2 to 4, wherein the said candidate base transceiver station identifying means are also operable to determine a required transmission power for each base transceiver station specified in such a candidate selection.

6. A network as claimed in claim 5, wherein the said candidate base transceiver station identifying means include:
path loss calculation means (60) for calculating, for each base transceiver station specified in such a candidate selection, a measure of the path loss (PL1-PLn) between the base transceiver station concerned and the mobile station; required received power calculation means (58) for calculating a minimum power (RPXP) at which the mobile station should receive downlink signals; and
required transmission power calculation means (62) for calculating the said required transmission power for each base transceiver station specified in the candidate selection based on the calculated minimum power and the said path-loss measure for the base transceiver station concerned.

7. A network as claimed in any preceding claim, further including ranking means (48) operable to determine an order of ranking of the base transceiver stations of the said plurality, and to transmit a ranking message (RM) to each base transceiver station of the said plurality to inform it of its rank in the determined ranking order.

8. A network as claimed in any one of claims 2 to 7, wherein the said candidate base transceiver station identifying means include:
transmit power storage means (54) having storage regions corresponding respectively to the base transceiver stations of the said plurality, each storage region serving to store a measure of the downlink transmission power of its corresponding base transceiver station.

9. A network as claimed in claim 8, wherein the said candidate base transceiver station identifying means further include:
storage initialisation means (52) operable, when a measure of the initial downlink transmission power (ITXP1-ITXPn) of one of the base transceiver stations of the said plurality is received, to cause that initial measure to be stored in the storage region corresponding to that base transceiver station of the said transmit power storage means (54); and
storage updating means (52) operable, when power control information (PCB; PCB1-PCBn) specifying a change to the said downlink transmission power for the base transceiver concerned is received, to update the stored measure for that base transceiver station:in accordance with the specified change.

10. A network as claimed in any one of claims 2 to 9, wherein the said candidate base transceiver station identifying means include:
received power storage means (56) having storage regions corresponding respectively to the base transceiver stations of the said plurality, each such storage region serving to store a measure (RXP1-RXPn) of the power at which a downlink signal transmitted to the mobile station by the corresponding base station is received by the mobile station.

11. A network as claimed in claim 6, wherein the said path loss calculation means (60) are operable to calculate the path loss for such a specified base transceiver station in dependence upon the difference between a downlink transmission power of the base transceiver station concerned and the power at which a downlink signal transmitted by the base transceiver station concerned to the mobile station is received by the mobile station.

12. A network as claimed in any preceding claim, wherein the said base transceiver stations of the said plurality are base transceiver stations that are involved in a soft hand-off operation of the network.

13. A communications method for use in a cellular mobile communications network, comprising the steps of:
when a mobile station (40) of the network is capable of receiving a downlink signal (DS1-DSn) from a plurality of base transceiver stations (BTS1-BTSn) of the network, the mobile station determines that at least one of the plurality of base transceiver stations is not to transmit a subsequent such downlink signal to the mobile station;
the plurality of base transceiver stations are informed of the determination made by the mobile station using one or more uplink signals (US) transmitted by the mobile station to such base transceiver stations; and
each said base transceiver station (20) receives the uplink signals and prevents itself from transmitting said subsequent downlink signal in response to the received uplink signal(s);
**characterised in that**:
the mobile station generates base transceiver station selection information (BSM) according to the determination made by the decision means using an identification system in which each of the plurality of base transceiver stations has a distinct identity (RANK (1), (2), ...), and transmits the same said selection information to the plurality of base transceiver stations without including distinct identity information for each of the plurality of base transceiver stations in the selection information; and
each of the plurality of base transceiver stations is informed, separately from said selection information, of its said identity in the identification system used by the informing means, and processes the selection information according to its said identity to determine whether or not it is required to transmit said subsequent downlink signal.

14. A base transceiver station for use in a cellular mobile communications network, comprising:
receiving means (24) operable, when a mobile station of the network is capable of receiving a downlink signal from the claimed base transceiver station and at least one further base transceiver station of the network, to receive one or more uplink signals transmitted by the mobile station to inform the base transceiver stations that the mobile station has determined that at least one of the base transceiver stations is not to transmit a subsequent such downlink signal to the mobile station; and
disabling means (28) operable to prevent the claimed base transceiver station from transmitting said subsequent downlink signal in response to the received uplink signal(s);
**characterised in that**:
the receiving means (24) has a selection information portion responsive to base transceiver station selection information (BSM) generated by said mobile station using an identification system in which the claimed base transceiver station and each further base transceiver station has a distinct identity, the same said selection information (BSM) being transmitted to the claimed base transceiver station and each further base transceiver station by the mobile station without including distinct identity information for each of the plurality of base transceiver stations in the selection information;
the receiving means (24) also has an identity information portion responsive to information (RM) supplied to the claimed base transceiver station separately from the selection information (BSM) and informing the claimed base transceiver station of its said identity in the identification system used by the mobile station; and
the disabling means (28) is operable to process the selection information received by said selection information portion according to said identity received separately by said identity information portion to determine whether or not the claimed base transceiver station is required to transmit said subsequent downlink signal.

## Patentansprüche

1. Zellulares Mobilkommunikationsnetzwerk, enthaltend eine Mobilstation (40) mit:
Basistransceiverstation-Entscheidungseinrichtungen (48), die betreibbar sind, um, wenn die Mobilstation in der Lage ist, ein Downlink-Signal (DS1 - DSn) von einer Mehrzahl von Transceiverstationen des Netzwerks (BTS1 - BTSn) zu empfangen, zu bestimmen, dass wenigstens eine der Basistransceiverstationen der Mehrzahl nicht ein nachfolgendes solches Downlink-Signal zu der Mobilstation zu übertragen hat; und
Basistransceiverstation-Informiereinrichtungen (46), die betreibbar sind, um die Mehrzahl von Basistransceiverstationen unter Verwendung von einem oder mehreren Uplink-Signal(en) (US), das/die von der Mobilstation zu solchen Basistransceiverstationen übertragen wurde(n), über die Bestimmung zu informieren, die durch die Basistransceiverstation-Entscheidungseinrichtungen durchgeführt wurde;
wobei jede der Basistransceiverstationen (20) Empfängereinrichtungen (24) zum Empfangen der Uplink-Signale und Sperreinrichtungen (28) enthält, die betreibbar sind, um ihre Basistransceiverstation vom Übertragen des nachfolgenden Downlink-Signals in Abhängigkeit von dem/den empfangenen Uplink-Signal(en) abzuhalten;
**dadurch gekennzeichnet, dass**:
die Informiereinrichtungen betreibbar sind, um Basistransceiverstation-Auswahlinformationen (BSM) gemäß der Bestimmung, die von den Entscheidungseinrichtungen durchgeführt wurde, unter Verwendung eines Identifikationssystems zu erzeugen, in welchem jede der Mehrzahl von Basistransceiverstationen eine eindeutige Identität (RANK (1), (2), ....) hat, und um die selbigen Auswahlinformationen zu der Mehrzahl von Basistransceiverstationen zu übertragen, ohne eindeutige Identitätsinformationen für jede der Mehrzahl von Basistransceiverstationen in die Auswahlinformationen einzufügen; und
jede der Mehrzahl von Basistransceiverstationen getrennt von den Auswahlinformationen über ihre Identität in dem Identifikationssystem informiert wird, das von den Informiereinrichtungen verwendet wird, und betreibbar ist, um die Auswahlinformationen gemäß ihrer Identität zu verarbeiten, um zu bestimmen, ob es erforderlich ist, das nachfolgende Downlink-Signal zu übertragen oder nicht.

2. Netzwerk nach Anspruch 1, wobei die Mobilstation ferner enthält:
Kandidatenbasistransceiverstation-Identifiziereinrichtungen, die betreibbar sind um wenigstens zwei verschiedene Kandidatenbasistransceiverstation-Auswahlen (BTS1, BTS2, BTS1 + BTS2) zu identifizieren, wobei jede solche Auswahl eine oder mehrere Basistransceiverstationen der Mehrzahl zur möglichen Verwendung beim Übertragen des nachfolgenden Downlink-Signals zu der Mobilstation spezifiziert;
Netzwerkinterferenzbestimmungseinrichtungen (52-68), die für jede der Kandidatenauswahlen betreibbar sind, um ein Maß der Netzwerkinterferenz (I_{BTS1}, I_{BTS2}, I_{MRC}) zu erzeugen, die von der Basistransceiverstation oder den Stationen verursacht würde, die in jener Kandidatenauswahl spezifiziert ist/sind, die das nachfolgende Downlink-Signal zu der Mobilstation überträgt;
welche Basistransceiverstation-Entscheidungseinrichtungen (70, 72) in Abhängigkeit von den Netzwerkinterferenzmaßen betreibbar sind, um zu entscheiden, welche der Kandidatenauswahlen zu verwenden ist, um das nachfolgende Downlink-Signal zu der Mobilstation zu übertragen, um zum Verringern von Netzwerkinterferenz zu tendieren, die aus der Übertragung jenes Downlink-Signals erwächst.

3. Netzwerk nach Anspruch 2, wobei wenigstens eine der Kandidatenauswahlen (BTS1, BTS2) nicht eine oder mehrere der Basistransceiverstation(en) der Mehrzahl spezifiziert.

4. Netzwerk nach Anspruch 2 oder 3, wobei wenigstens eine der Kandidatenauswahlen (BTS1 + BTS2) zwei oder mehr Basistransceiverstationen der Mehrzahl spezifiziert und die Mobilstation (40) Kombinierereinrichtungen enthält, die betreibbar sind, um die jeweiligen Downlink-Signale zu kombinieren, die von jenen zwei oder mehreren Basistransceiverstationen empfangen wurden.

5. Netzwerk nach einem der Ansprüche 2 bis 4, wobei die Kandidatenbasistransceiverstation-Identifiziereinrichtungen auch betreibbar sind, um eine erforderliche Übertragungsleistung für jede Basistransceiverstation zu bestimmen, die in einer solchen Kandidatenauswahl spezifiziert ist.

6. Netzwerk nach Anspruch 5, wobei die Kandidatenbasistransceiverstation-Indentifiziereinrichtungen enthalten:
Pfadverlustberechnungseinrichtungen (60), um für jede Basistransceiverstation, die in einer solchen Kandidatenauswahl spezifiziert ist, ein Maß des Pfadverlusts (PL1-PLn) zwischen der betroffenen Basistransceiverstation und der Mobilstation zu berechnen; Empfangsleistungserfordernisberechnungseinrichtungen (58) zum Berechnen einer minimalen Leistung (RPXP), mit welcher die Mobilstation Downlink-Signale empfangen sollte; und
Übertragungsleistungserfordemisberechnungseinrichtunge n (62) zum Berechnen der erforderlichen Übertragungsleistung für jede Basistransceiverstation, die in der Kandidatenauswahl spezifiziert ist, basierend auf der berechneten minimalen Leistung und dem Pfadverlustmaß für die betroffene Basistransceiverstation.

7. Netzwerk nach einem der vorhergehenden Ansprüche, ferner enthaltend Rangordnungseinrichtungen (48) die betreibbar sind, um eine Reihenfolge der Rangordnung der Basistransceiverstationen der Mehrzahl zu bestimmen und um eine Rangordnungsmitteilung (RM) zu jeder Basistransceiverstation der Mehrzahl zu übertragen, um sie über ihre Rangordnung in der bestimmten Rangordnungsreihenfolge zu informieren.

8. Netzwerk nach einem der Ansprüche 2 bis 7, wobei die Kandidatenbasistransceiverstation-Identifiziereinrichtungen enthalten:
Übertragungsleistungsspeichereinrichtungen (54), die Speicherbereiche entsprechend jeweils den Basistransceiverstationen der Mehrzahl haben, wobei jeder Speicherbereich zum Speichern eines Maßes der Downlink-Übertragungsleistung ihrer entsprechenden Basistransceiverstation dient.

9. Netzwerk nach Anspruch 8, wobei die Kandidatenbasistransceiverstation-Identifiziereinrichtungen ferner enthalten:
Speicherinitialisierungseinrichtungen (52), die betreibbar sind, um, wenn ein Maß der Initial-Downlink-Übertragungsleistung (ITXP1 - ITXPn) einer der Basistransceiverstationen der Mehrzahl empfangen wird, zu veranlassen, dass das Initialmaß in dem Speicherbereich entsprechend jener Basistransceiverstation von den Übertragungsleistungsspeichereinrichtungen (54) gespeichert wird; und
Speicheraktualisiereinrichtungen (52), die betreibbar sind, um, wenn Leistungssteuerinformationen (PCB; PCH1 - PCBn), die eine Änderung der Downlink-Übertragungsleistung für den betroffenen Basistransceiver spezifizieren, empfangen werden, das gespeicherte Maß für jene Basistransceiverstation gemäß der spezifizierten Änderung zu aktualisieren.

10. Netzwerk nach einem der Ansprüche 2 bis 9, wobei die Kandidatenbasistransceiverstation-Identifiziereinrichtungen enthalten:
Empfangsleistungsspeichereinrichtungen (56), die Speicherbereiche entsprechend jeweils den Basistransceiverstationen der Mehrzahl haben, wobei jeder solcher Speicherbereich zum Speichern eines Maßes (AXP1 - RXPn) der Leistung dient, mit welcher ein Downlink-Signal, das von der entsprechenden Basisstation zu der Mobilstation übertragen wird, von der Mobilstation empfangen wird.

11. Netzwerk nach Anspruch 6, wobei die Pfadverlustberechnungseinrichtungen (60) betreibbar sind, um den Pfadverlust für eine solche spezifizierte Transceiverstation in Abhängigkeit von der Differenz einer Downlink-Übertragungsleistung der betroffenen Basistransceiverstation und der Leistung zu berechnen, mit welcher ein Downlink-Signal, das von der betroffenen Basistransceiverstation zu der Mobilstation übertragen wird, von der Mobilstation empfangen wird.

12. Netzwerk nach einem der vorhergehenden Ansprüche, wobei die Basistransceiverstationen der Mehrzahl Basistransceiverstationen sind, die in einem sanften Hand-off-Betrieb des Netzwerks involviert sind.

13. Kommunikationsverfahren zur Verwendung in einem zellularen Mobilkommunikationsnetzwerk, enthaltend die Schritte:
die Mobilstation bestimmt, dass, wenn eine Mobilstation (40) des Netzwerks in der Lage ist, ein DownIink-Signal (DS1 - DSn) von einer Mehrzahl von Basistransceiverstationen (BTS1 - BTSn) des Netzwerks zu empfangen, dass wenigstens eine der Mehrzahl der Basistransceiverstationen kein nachfolgendes derartiges Downlink-Signal zu der Mobilstation zu übertragen hat;
die Mehrzahl von Basistransceiverstationen wird über die Bestimmung, die von der Mobilstation durchgeführt wurde, unter Verwendung von einem oder mehreren Uplink-signalen (US) informiert, die von der Mobilstation zu solchen Basistransceiverstationen übertragen werden; und
jede solche Basistransceiverstation (20) empfängt die Uplink-Signale und hindert sich selbst am Übertragen des nachfolgenden Downlink-Signals in Abhängigkeit von dem/den empfangenen Uplink-Signal (en);
**dadurch gekennzeichnet, dass**
die Mobilstation Basistransceiverstation-Auswahlinformationen (BSN) gemäß der Bestimmung, die von den Entscheidungseinrichtungen durchgeführt wurde, unter Verwendung eines Identifikationssystems erzeugt, in welchem jede der Mehrzahl von Basistransceiverstationen eine eindeutige Identität (RANK (1), (2), ...), hat, und die selbigen Auswahlinformationen zu der Mehrzahl von Basistransceiverstationen überträgt, ohne eindeutige Identitätsinformationen für jede der Mehrzahl von Basistransceiverstationen in die Auswahlinformationen einzufügen; und
jede der Mehrzahl von Basistransceiverstationen getrennt von den Auswahlinformationen über ihre Identität in dem Identifikationssystem informiert wird, das von den Informiereinrichtungen verwendet wird, und die Auswahlinformation gemäß ihrer Identität verarbeitet, um zu bestimmen, ob es erforderlich ist, das nachfolgende Downlink-Signal zu übertragen oder nicht.

14. Basistransceiverstation zur Verwendung in einem zellularen Mobilkommunikationsnetzwerk, enthaltend:
Empfangseinrichtungen (24), die betreibbar sind, um, wenn eine Mobilstation des Netzwerks in der Lage ist, ein Downlink-Signal von der beanspruchten Basistransceiverstation und wenigstens einer weiteren Basistransceiverstation des Netzwerks zu empfangen, ein oder mehrere Uplink-Signale zu empfangen, die von der Mobilstation übertragen wurden, um die Basistransceiverstationen zu informieren, dass die Mobilstation bestimmt hat, dass wenigstens eine der Basistransceiverstationen ein nachfolgendes derartiges Downlink-Signal nicht zu der Mobilstation zu übertragen hat; und
Sperreinrichtungen (28), die betreibbar sind, um die beanspruchte Basistransceiverstation am Übertragen des nachfolgenden Downlink-Signals in Abhängigkeit von dem/den empfangenen Uplink-Signal(en) zu hindern;
**dadurch gekennzeichnet, dass**:
die Empfangseinrichtungen (24) einen Auswahlinformationsteil haben, der auf Basistransceiverstation-Auswahlinformationen (BSM) anspricht, die von der Mobilstation unter Verwendung eines Identifikationssystems erzeugt wurden, in welchem die beanspruchte Basistransceiverstation und jede weitere Basistransceiverstation eine eindeutige Identität hat, welche selbige Auswahlinformationen (BSM) zu der beanspruchten Basistransceiverstation und jede weitere Basistransceiverstation von der Mobilstation übertragen wird, ohne eindeutige Identitätsinformationen für jede der Mehrzahl von Basistransceiverstationen in den Auswahlinformationen einzufügen;
die Empfangseinrichtungen (24) auch einen Identitätsinformationsteil haben, der auf Informationen (RN) anspricht, die getrennt von den Auswahlinformationen (BSM) zu der beanspruchten Basistransceiverstation geliefert werden und die beanspruchte Basistransceiverstation über ihre Identität in dem Identifikationssystem informieren, das von der Mobilstation verwendet wird; und
die Sperreinrichtungen (28) betreibbar sind, um die Auswahlinformationen, die von dem Auswahlinformationsteil empfangen wurden, gemäß der Identität zu verarbeiten, die von dem Identitätsinformationsteil getrennt empfangen wurde, um zu bestimmen, ob es für die beanspruchte Basistransceiverstation erforderlich ist, das nachfolgende Downlink-Signal zu übertragen oder nicht.

## Revendications

1. Réseau de communication mobile cellulaire comprenant une station mobile (40) comportant :
un moyen de décision de station d'émetteur-récepteur de base (48) pouvant fonctionner, lorsque la station mobile peut recevoir un signal de liaison descendante (DS1-DSn) en provenance d'une pluralité de stations d'émetteur-récepteur de base du réseau (BTS1-BTSn), pour déterminer qu'au moins l'une des stations d'émetteur-récepteur de base de ladite pluralité n'est pas pour émettre un tel signal de liaison descendante suivant sur la station mobile; et
un moyen d'information de station d'émetteur-récepteur de base (46) pouvant fonctionner pour informer la pluralité de stations d'émetteur-récepteur de base de la détermination qui est réalisée par ledit moyen de décision de station d'émetteur-récepteur de base en utilisant un ou plusieurs signaux de liaison de liaison montante (US) qui sont émis par la station mobile sur ces stations d'émetteur-récepteur de base,
dans lequel chaque dite station d'émetteur-récepteur de base (20) inclut un moyen de récepteur (24) pour recevoir lesdits signaux de liaison montante et un moyen d'invalidation (28) pouvant fonctionner pour empêcher que sa station d'émetteur-récepteur de base n'émette ledit signal de liaison descendante suivant en réponse au signal ou aux signaux de liaison montante reçus,
**caractérisé en ce que** :
le moyen d'information peut fonctionner pour générer une information de sélection de station d'émetteur-récepteur de base (BSM) conformément à la détermination réalisée par le moyen de décision en utilisant un système d'identification dans lequel chacune de la pluralité de stations d'émetteur-récepteur de base présente une identité distincte (RANK(1), (2), ...) et pour transmettre la même dite information de sélection sur la pluralité de stations d'émetteur-récepteur de base sans inclure une information d'identité distincte pour chacune de la pluralité de stations d'émetteur-récepteur de base dans l'information de sélection ; et
chacune de la pluralité de stations d'émetteur-récepteur de base est informée, séparément de ladite information de sélection, de sa dite identité dans le système d'identification comme utilisé par le moyen d'information et peut fonctionner pour traiter l'information de sélection conformément à sa dite identité pour déterminer si oui ou non il est requis d'émettre ledit signal de liaison descendante suivant.

2. Réseau selon la revendication 1, dans lequel la station mobile inclut en outre :
un moyen d'identification de station d'émetteur-récepteur de base de candidat pouvant fonctionner pour identifier au moins deux sélections de station d'émetteur-récepteur de base de candidat différentes (BTS1, BTS2, BTS1 + BTS2), chaque sélection de ce type spécifiant une ou plusieurs stations d'émetteur-récepteur de base de ladite pluralité pour une utilisation possible au niveau de l'émission du signal de liaison descendante suivant sur la station mobile ;
un moyen de détermination d'interférence de réseau (52 - 68) pouvant fonctionner, pour chacune des sélections de candidat, pour produire une mesure de l'interférence de réseau (I_{BTS1}, I_{BTS2}, I_{MRC}) qui devrait être générée par la station ou les stations d'émetteur-récepteur de base comme spécifié dans la sélection de candidat émettant ledit signal de liaison descendante suivant sur la station mobile ;
ledit moyen de décision de station d'émetteur-récepteur de base (70, 72) pouvant fonctionner, en fonction des mesures d'interférence de réseau, pour décider de celle desdites sélections de candidat qui doit être utilisée pour émettre ledit signal de liaison descendante suivant sur la station mobile de manière à tendre à réduire une interférence de réseau résultant de la transmission de ce signal de liaison descendante.

3. Réseau selon la revendication 2, dans lequel l'une desdites sélections de candidat (BTS1, BTS2) ne spécifie pas une ou plusieurs des stations d'émetteur-récepteur de base de ladite pluralité.

4. Réseau selon la revendication 2 ou 3, dans lequel au moins l'une desdites sélections de candidat (BTS1 + BTS2) spécifie deux stations d'émetteur-récepteur de base ou plus de ladite pluralité et ladite station mobile (40) inclut un moyen de combineur pouvant fonctionner pour combiner les signaux de liaison descendante respectifs qui sont reçus depuis ces deux stations d'émetteur-récepteur de base ou plus.

5. Réseau selon l'une quelconque des revendications 2 à 4, dans lequel ledit moyen d'identification de station d'émetteur-récepteur de base de candidat peut également fonctionner pour déterminer une puissance d'émission requise pour chaque station d'émetteur-récepteur de base comme spécifié dans une telle sélection de candidat.

6. Réseau selon la revendication 5, dans lequel ledit moyen d'identification de station d'émetteur-récepteur de base de candidat inclut :
un moyen de calcul de perte de voie (60) pour calculer, pour chaque station d'émetteur-récepteur de base spécifiée dans une telle sélection de candidat, une mesure de la perte de voie (PL1-PLn) entre la station d'émetteur-récepteur de base concernée et la station mobile ; un moyen de calcul de puissance de réception requise (58) pour calculer une puissance minimum (RPXP) à laquelle la station mobile doit recevoir des signaux de liaison descendante ; et
un moyen de calcul de puissance d'émission requise (62) pour calculer ladite puissance d'émission requise pour chaque station d'émetteur-récepteur de base spécifiée dans la sélection de candidat sur la base de la puissance minimum calculée et de ladite mesure de perte de voie pour la station d'émetteur-récepteur de base concernée.

7. Réseau selon l'une quelconque des revendications précédentes, incluant en outre un moyen de classement (48) pouvant fonctionner pour déterminer un ordre de classement des stations d'émetteur-récepteur de base de ladite pluralité et pour transmettre un message de classement (RM) sur chaque station d'émetteur-récepteur de base de ladite pluralité pour l'informer de son classement selon l'ordre de classement déterminé.

8. Réseau selon l'une quelconque des revendications 2 à 7, dans lequel ledit moyen d'identification de station d'émetteur-récepteur de base de candidat inclut :
un moyen de stockage de puissance d'émission (54) qui comporte des régions de stockage correspondant respectivement aux stations d'émetteur-récepteur de base de ladite pluralité, chaque région de stockage servant à stocker une mesure de la puissance d'émission de liaison descendante de sa station d'émetteur-récepteur de base correspondante.

9. Réseau selon la revendication 8, dans lequel ledit moyen d'identification de station d'émetteur-récepteur de base de candidat inclut en outre :
un moyen d'initialisation de stockage (52) pouvant fonctionner, lorsqu'une mesure de la puissance d'émission de liaison descendante initiale (ITXP1 - ITXPn) de l'une des stations d'émetteur-récepteur de base de ladite pluralité est reçue pour faire en sorte qu'une mesure initiale soit stockée dans la région de stockage correspondant à cette station d'émetteur-récepteur de base dudit moyen de stockage de puissance d'émission (54) ; et
un moyen de mise à jour de stockage (52) pouvant fonctionner, lorsqu'une information de commande de puissance (PCB ; PCB1 - PCBn) qui spécifie une modification de ladite puissance d'émission de liaison descendante pour l'émetteur-récepteur de base concerné est reçue, pour mettre à jour la mesure stockée pour cette station d'émetteur-récepteur de base conformément à la modification spécifiée.

10. Réseau selon l'une quelconque des revendications 2 à 9, dans lequel ledit moyen d'identification de station d'émetteur-récepteur de base de candidat inclut :
un moyen de stockage de puissance reçue (56) qui comporte des régions de stockage correspondant respectivement aux stations d'émetteur-récepteur de base de ladite pluralité, chacune de ces régions de stockage servant à stocker une mesure (RXP1 - RXPn) de la puissance à laquelle un signal de liaison descendante qui est transmis sur la station mobile par la station de base correspondante est reçu par la station mobile.

11. Réseau selon la revendication 6, dans lequel ledit moyen de calcul de perte de voie (60) peut fonctionner pour calculer la perte de voie pour une station d'émetteur-récepteur de base spécifique en fonction de la différence entre une puissance d'émission de liaison descendante de la station d'émetteur-récepteur de base concernée et la puissance à laquelle un signal de liaison descendante qui est transmis par la station d'émetteur-récepteur de base concernée sur la station mobile est reçu par la station mobile.

12. Réseau selon l'une quelconque des revendications précédentes,
dans lequel lesdites stations d'émetteur-récepteur de base de ladite pluralité sont des stations d'émetteur-récepteur de base qui sont mises en jeu lors d'une opération de transfert logique du réseau.

13. Procédé de communication pour une utilisation dans un réseau de communication mobile cellulaire, comprenant les étapes de :
lorsqu'une station mobile (40) du réseau peut recevoir un signal de liaison descendante (DS1 - DSn) depuis une pluralité de stations d'émetteur-récepteur de base (BTS1 - BTSn) du réseau, la station mobile détermine qu'au moins l'une de la pluralité de stations d'émetteur-récepteur de base n'est pas en train d'émettre un signal de liaison descendante suivant sur la station mobile ;
les stations de la pluralité de stations d'émetteur-récepteur de base sont informées de la détermination qui est réalisée par la station mobile en utilisant un ou plusieurs signaux de liaison montante (US) qui sont émis par la station mobile sur ces stations d'émetteur-récepteur de base ; et
chaque station d'émetteur-récepteur de base (20) reçoit les signaux de liaison montante et s'empêche elle-même d'émettre ledit signal de liaison descendante suivant en réponse au signal ou aux signaux de liaison montante reçus,
**caractérisé en ce que** :
la station mobile génère une information de sélection de station d'émetteur-récepteur de base (BSM) conformément à la détermination qui est réalisée par le moyen de décision en utilisant un système d'identification selon lequel chacune de la pluralité de stations d'émetteur-récepteur de base présente une identité distincte (RANK(1), (2) ...) et transmet la même dite information de sélection à la pluralité de stations d'émetteur-récepteur de base sans inclure une information d'identité distincte pour chacune de la pluralité de stations d'émetteur-récepteur de base dans l'information de sélection ; et
chacune de la pluralité de stations d'émetteur-récepteur de base est informée, séparément de ladite information de sélection, de sa dite identité dans le système d'identification utilisé par le moyen d'information, et traite l'information de sélection conformément à sa dite identité afin de déterminer si oui ou non il est requis d'émettre ledit signal de liaison descendante suivant.

14. Station d'émetteur-récepteur de base pour une utilisation dans un réseau de communication mobile cellulaire, comprenant :
un moyen de réception (24) pouvant fonctionner, lorsqu'une station mobile du réseau peut recevoir un signal de liaison descendante en provenance de la station d'émetteur-récepteur de base réclamée et d'au moins une station d'émetteur-récepteur de base supplémentaire du réseau, pour recevoir un ou plusieurs signaux de liaison montante qui sont émis par la station mobile afin d'informer les stations d'émetteur-récepteur de base du fait que la station mobile a déterminé qu'au moins l'une des stations d'émetteur-récepteur de base n'est pas pour émettre un signal de liaison descendante suivant sur la station mobile ; et
un moyen d'invalidation (28) pouvant fonctionner pour empêcher que la station d'émetteur-récepteur de base réclamée n'émette ledit signal de liaison descendante suivant en réponse au signal ou aux signaux de liaison montante reçus,
**caractérisée en ce que** :
le moyen de réception (24) comporte une partie d'information de sélection qui est sensible à une information de sélection de station d'émetteur-récepteur de base (BSM) comme généré par ladite station mobile en utilisant un système d'identification selon lequel la station d'émetteur-récepteur de base réclamée et chaque station d'émetteur-récepteur de base supplémentaire présentent une identité distincte, la même dite information de sélection (BSM) étant transmise sur la station d'émetteur-récepteur de base réclamée et sur chaque station d'émetteur-récepteur de base supplémentaire au moyen de la station mobile sans inclure une information d'identité distincte pour chacune de la pluralité de stations d'émetteur-récepteur de base dans l'information de sélection ;
le moyen de réception (24) comporte également une partie d'information d'identité qui est sensible à une information (RM) qui est appliquée sur la station d'émetteur-récepteur de base réclamée séparément de l'information de sélection (BSM) et qui informe la station d'émetteur-récepteur de base réclamée de sa dite identité dans le système d'identification utilisé par la station mobile ; et
le moyen d'invalidation (28) peut fonctionner pour traiter l'information de sélection qui est reçue par ladite partie d'information de sélection conformément à ladite identité reçue séparément dans ladite partie d'information d'identité pour déterminer si oui ou non la station d'émetteur-récepteur de base réclamée doit émettre ledit signal de liaison descendante suivant.
